(19) Europäisches Patentamt

European Patent Office

Office européen des brevets

(11) Publication number: **0 304 476 B1**

(12) # EUROPEAN PATENT SPECIFICATION

(45) Date of publication of patent specification:
**16.10.91 Bulletin 91/42**

(51) Int. Cl.$^5$: **B29C 65/50, B29C 65/68**

(21) Application number: **88903021.9**

(22) Date of filing: **24.02.88**

(86) International application number:
**PCT/US88/00592**

(87) International publication number:
**WO 88/06517 07.09.88 Gazette 88/20**

(54) **METHOD OF JOINING ARTICLES.**

(30) Priority: **24.02.87 US 17497**
**11.06.87 US 61259**
**11.06.87 US 61354**
**16.11.87 US 120883**

(43) Date of publication of application:
**01.03.89 Bulletin 89/09**

(45) Publication of the grant of the patent:
**16.10.91 Bulletin 91/42**

(84) Designated Contracting States:
**AT BE CH DE FR GB IT LI NL SE**

(56) References cited:
**EP-A- 0 036 963**
**EP-A- 0 123 540**
**EP-A- 0 157 640**
**DE-A- 3 321 571**
**FR-A- 1 374 690**
**FR-A- 1 392 814**
**FR-A- 2 111 818**
**US-A- 3 340 328**
**US-A- 3 359 524**
**US-A- 3 987 276**
**US-A- 4 085 286**
**US-A- 4 151 126**
**US-A- 4 421 582**
**US-A- 4 502 929**
**US-A- 4 518 552**
**US-A- 4 570 055**
**Japanese Patent Gazette, Section CH, week**
**8714, Derwent Publ. Ltd (London, GB) class A,**
**no. 87-099143 (14), & JP, A, 62048747 (Mit-**
**suboshi) 3 March 1987**
**Encyclopedia of Polymer Science and En-**
**gineering, 2nd Edition, vol. 6, 1986, J. Wiley &**
**Sons (New York, US) pages 490-494**

(56) References cited:
**Japanese Patent Gazette, Section CH, week**
**8345, Derwent Publ. Ltd (London, GB) class A,**
**no. 83-810884 (45), & JP, A, 58164627 (Mit-**
**suboshi) 29 September 1983**

(73) Proprietor: **RAYCHEM CORPORATION**
**300 Constitution Drive**
**Menlo Park California 94025 (US)**

(72) Inventor: **McMILLS, Corey, John**
**721 Distel Drive**
**Los Altos, CA 94022 (US)**
Inventor: **ROSS, John, Arthur**
**33842 Whitehead Lane**
**Fremont, CA 94555 (US)**
Inventor: **Sampson, Jeffrey, Alan**
**3822 Eastlake Way**
**Redwood City, CA 94062 (US)**
Inventor: **BARMA, Pradeep**
**2416 Jackson Street**
**Fremont, CA 94538 (US)**
Inventor: **MATHEWS, Barry**
**1344 Charnwood Square**
**San Jose, CA 95117 (US)**
Inventor: **RITTER, Robert**
**42555 Fontainebleau Park Lane**
**Fremont, CA 94538 (US)**
Inventor: **MULLANEY, Julian, S.**
**5710 Oakmeadow Lane, No. 2509**
**Raleigh, NC 27612 (US)**

(74) Representative: **Auckland, Jacqueline et al**
**Raychem Limited Intellectual Property Law**
**Department Faraday Road Dorcan**
**Swindon, Wiltshire SN3 5HH (GB)**

EP 0 304 476 B1

## Description

This invention relates to methods of joining articles together with the aid of conductive polymer components, and to novel conductive polymer components.

Conductive polymers are well known. They comprise a polymeric component and, dispersed or otherwise distributed therein, a particulate conductive filler, e. g. carbon black. Conductive polymers have been widely used in electrical heaters, including heaters which are in the form of heat-recoverable articles or which are secured to heat-recoverable articles so that, by powering the heater, the article can be caused to recover. Typically, the recovery of the article results in joining, repairing, reinforcing or otherwise modifying one or more substrates around or against which the article recovers. Recently, it has been shown that conductive polymers which retain substantial strength above their melting point, especially sintered polymers such as ultra high molecular weight polyethylene (UHMWPE), are particularly useful for modifying pipes composed of organic polymers (plastic pipes). Reference may be made for example to US Patent Nos. 3,987,276, 4,085,286, 4,177,376, 4,177,446, 4,421,582, 4,455,482, 4,570,055, 4,575,618, 5,686,071, UK Patent Nos. 1,265,194, 1,449,589, and 2,124,439, German Patent Application No. 3,442,674, US Patent Application Serial Nos. 596,761, now abandoned, published at European application No. 157,640, 582,105, now abandoned, published as European application No. 153,199, and 818,845, now abandoned, published as European application No. 231,068, and copending commonly assigned U.S. Patent Application Serial Nos. 720,117 (MP0922) filed April 2, 1985, 720,118 (MP1039) filed April 2, 1985, 784,288 (MP1086) filed October 4, 1985, 818,846 (MP1100) filed January 14, 1986, 853,805 (MP1117) filed April 18, 1986, 867,830 (MP1130) filed May 27, 1986, 17,497 (MP1180) filed February 23, 1987, 61,353 (MP1186) filed June 11, 1987, 61,354 (MP1187) filed June 11, 1987, 61,259, (MP1202) filed June 11, 1987, 67,679 (MP922) filed June 26, 1987, 75,929 (MP1095) filed July 21, 1987, 89,389, (MP1130) filed August 25, 1987, 120,883 (MP1231) filed November 16, 1987, and 132,698 (MP0907) filed December 14, 1987. The disclosures of each of the patents and patent applications referred to above are incorporated herein by reference.

A method of joining a first article to a second article using a traction element containing resistance wires is described in FR 1374690. The traction element is expanded and fixed in its expanded state by rapid cooling, and can return to its original shape by heating which can be achieved by passing electrical current through the heating elements, thereby joining the first and second articles.

We have now discovered that conductive polymer components can be used to join together articles even when the components are neither heat-recoverable themselves nor fixed to heat-recoverable articles.

In one respect, the present invention provides a method of joining a first article to a second article which comprises

(1) placing the first article adjacent the second article; and

(2) generating heat within a conductive polymer component which

(a) is not heat-recoverable,

(b) has a ratio of external surface area/volume of at least 15.8cm²/cm³ (40 inch²/inch³),

(c) is placed between the first and second articles, and;

(d) expands when the heat is generated within it, the heat being generated within the conductive polymer component by passing electrical current through it, said electrical current not passing through either the first article or the second article; and

the first and second articles and the conductive polymer component being such that, or being subject to physical restraint such that, the expansion of the conductive polymer component when the heat is generated within it, results in the first article being joined to the second article through the conductive polymer component.

The conductive polymer component can be part of the first article and/or the second article, or it can be a separate component. Preferably at least one of, particularly each of, the first and second articles (as well as the conductive polymer component) is not heat-recoverable, by which we mean that if the article, or component, on its own, is heated from room temperature to any temperature which is employed in the defined method and is then cooled back to room temperature, each of its dimensions at room temperature is substantially unchanged by such heating and cooling; for example no dimension changes by more than 10%. The term "joining" is used herein to include an improvement in an existing joint, for example by fusing together surfaces which are already maintained adjacent to each other in some other way. The generation of heat within the conductive polymer is usually effected by passing current through it, but other methods can be used, for example induction heating and ultra-sonic heating.

In another aspect, the present invention provides an article which is not heat-recoverable and which comprises

(a) an element which is in the form of a tape and which is composed of a conductive polymer which

(i) comprises a sintered polymer component composed of ultra-high molecular weight polyethylene, and distributed in the polymeric component, a conductive particulate filler, and (ii) increases in volume by at least 10% when it is heated from 23°C to the melting point of at least part of the polymeric component, and

(b) electrodes which can be connected to a source of electrical power and which, when so connected, cause current to flow through the conductive polymer element.

Further embodiments of the invention are defined in teh features of the dependent claims.

The conductive polymer composition preferably comprises polyethylene, particularly ultra-high molecular weight polyethelene (UHMWPE) together with a particulate conductive filler, especially carbon black. In general, the composition preferably consists essentially of

(a) a matrix consisting essentially of organic polymer particles which have been sintered together so that the particles have coalesced without completely losing their identity, and

(b) a particulate filler, preferably carbon black, which is dispersed in said matrix but which is present substantially only at or near the boundaries of the coalesced particles.

Suitable formulations are found in U.S. application Serial Nos. 596,761, now abandoned, published as European application 157,640, and 720,117, the disclosures of which are incorporated herein by reference. Although UHMWPE is preferred, other polymers that may be sintered include polytetrafluoroethylene, polyphenylene sulfide, and polyimides.

Such conductive polymers can be prepared by sintering a dry blend of the polymer particles and the filler. A typical process involves compaction of the dry blend, sintering of the compacted blend at or above atmospheric pressure and at a temperature at which the polymer softens but does not flow excessively, followed by cooling under pressure. The sintering may be conducted in a mold to produce an article of a desired shape, or a sintered block or rod (frequently produced by ram extrusion) may be skived on a lathe or otherwise machined to produce an article with the desired dimensions. The surface shape may be smooth or rough and the texture of the article may be changed, e.g. grooved by use of an appropriate skiving blade, if it is desired to increase the surface area, e.g. for heat transfer or bonding purposes. Irregular or ribbed surfaces are preferred for strong welds.

The conductive polymers suitable for use in this invention generally have a low electrical resistivity, generally below 1000 ohm-cm, particularly below 100 ohm-cm, especially below 10 ohm-cm, for example, in the range of about 0.5 to 10 ohm-cm. It the conductive polymer is to be electrically powered, the desired resistivity depends upon the power source, which may be for example DC up to about 48 volts or AC of up to about 120 or 240 volts. Sintering produces low electrical resistivity at a lower conductive filler loading than for a melt-blended product. Thus the preferred sintered compositions for use in this invention contain less than 9%, preferably less than 7%, particularly 2-6%, by volume of carbon black or other conductive filler. Particularly preferred carbon black are those sold by Akzo Chemie under the tradename Ketjenblack EC and by Degussa under the tradename Printex XE-2. The low levels of carbon black help to maintain the desired physical properties of the polymer such as flexibility, good elongation, high tensile strength, good notch and impact resistance, and good chemical resistance. The conductive polymer may optionally be crosslinked.

The preferred polymers are those which maintain a relatively high viscosity above their softening or melting point; i.e. those polymers which, at a temperature 50°C above its softening point, have a melt flow index of less than 0.3 g/10 min., particularly less than 0.1 g/10 min., especially less than 0.05 g/10 min. at a loading of 3 kg, and a melt flow index less than 3.0 g/10 min., particularly less than 1.0 g/10 min., especially less than 0.1 g/10 min. at a loading of 15 kg. UHMWPE, which has a molecular weight preferably greater than 1.5 million, particularly greater than 3.0 million, and frequently as high as 4 to about 6 million, is a most preferred polymer in this invention, although very high molecular weight polyethylene (VHMWPE), which has a molecular weight of about 600,000 to 1.5 million may also be used after melt-blending.

The conductive polymers useful in the present invention preferably exhibit ZTC properties; i.e., in the temperature range of operation, e.g. 23-250°C, the resistivity changes by a factor of less than 5, preferably less than 2, especially less than 1.

For adequate bonding to an article, when electrically powered or otherwise heated, the conductive polymer preferably can achieve a bond-line temperature of at least 135°C, preferably 150°C, more preferably at least 200°C, especially at least 250°C. The desired temperature is preferably attained under normal ambient conditions in less than 30 minutes, preferably less than 15 minutes, particularly less than 5 minutes, especially 0.5 to 3 minutes, when using a power source of less than 50 volts. Such rapid heating and high temperatures can result in short installation times and minimal damage to the conductive polymer, the substrate or surrounding material. In general it has previously been recognized that the maximum power density which such conductive polymers were capable of sustaining was only up to about 25 watts/cm$^3$ before damage to the polymer occurred.

Environmental protection of cables and pipes may be achieved by the wrapping of a sheet of material around a substrate, i.e. by the use of a "wrap-around" sleeve. An effective low profile seal may be made between the edges of the wrap-around sleeve by use of a conductive polymer sealing strip or other device. The conductive polymer, when heated, may have a significant coefficient of thermal expansion and the sealing device, when heated, serves to locate the two surfaces to be joined, optionally bridging a gap between them.

The sealing strip may be essentially circular, oval or rectangular in cross-section and preferably has opposing or spaced-apart recesses separated by a center region into which the edge portions of the wrap-around sleeve or other sheet may be inserted. The edges may be positioned in the sealing strip either by sliding the strip over the edges or inserting them transversely into the strip. Preferably some means is provided for holding the edges in the recesses and against the center region, e.g. by use of a wrap such as an elastomeric band positioned around the circumference of the sleeve. Preferably the center region expands when heated to improve a weld or bond in that region. If, as is preferred, the materials of the sealing strip and that of the edge portions are compatible, interpenetration may occur under heating and pressure to improve the bond or weld. Adhesive may be provided in the recesses of the sealing device. The recesses may be smooth or of a shape designed to maintain the position of the sleeve edge portions during heating or assembly, e.g. a shape designed to give a snap-fit to the edge portions, and the recesses may be of a size such that the edge portions are a free fit and bonding occurs due to thermal expansion. A preferred embodiment is one in which the recesses are larger than the edge portions and have undercuts which can be filled as the conductire polymer expands. This further strengthens the bonded area by putting the bond line in compression and shear. An alternative embodiment is one in which the sealing strip comprises a rod of conductive polymer which has a single slot or channel cut into the center. When heated, selected portions of the sealing strip expand to contain the inserted edge portions. Heating of the sealing strip may be external (e.g. via a torch or oven) or internally generated if electrodes are incorporated into the strip or are present on one or both surfaces. The electrodes preferably extend along the length of the strip and may be insulated, for example by being coated on one or both sides with an electrically insulating material.

In one specific aspect of the invention, a device suitable for providing pressure access to a pipe or cable or other supply line containing fluid or gas is attached to a pique or supply line. The device comprises, at least in part, a conductive polymer which, when heated (preferably after electrodes thereof are connected to a source of electrical power), causes the device to be welded to the pipe. A hole may be made in the supply line through a means for receiving a tap after the device has been installed or else the hole may be made prior to installation. The former is preferred to avoid loss of pressure in the pipe during installation, and to allow the device to serve as a drilling guide.

The device is preferably of substantially uniform composition and the surface for attachment, the electrodes, and the means for receiving a tap are preferably integral with one another. The device may be substantially circular in cross-section or preferably substantially planar. For the circular device, one electrode may be positioned in a circumferential recess and the second electrode may be positioned in a substantial axial hole which also provides a means for receiving a tap. Contact resistance between the device and the electrodes may be reduced and adhesion may be improved by painting silver paint between the conductive polymer and the electrode. The electrodes preferably comprise a flexible wire or braid, or alternatively may comprise silver paint. In a preferred geometry, the device is substantially planar and comprises a conductive polymer tape with two metal strip electrodes positioned at opposite edge portions. The means for receiving a tap is cylindrical and projects from the surface of the tape. A hole is made through the tape to allow access of fluid between the tap and optionally also for receipt of the tap. This preferred device may be flexible such that it can conform to the surface of pipes of a wide variety of sizes. The device can, if desired, be removed from the pipe after installation, by repowering to remelt the weld line.

In another embodiment, the sealing article may comprise a conductive polymer configured in a tape form such that the power load which can be placed upon the conductive polymer (in terms of watt density) can be increased to at least 50 watts/cm$^3$, preferably at least 100 watts/cm$^3$, and in some cases up to 200 watts/cm$^3$ or higher. Tapes which can withstand such high power loadings are extremely useful for providing high amounts of heat in confined and limited spaces in a short amount of time using low overall power input. The term "tape" means material of any configuration (e.g. a strip, rod, or piece of oval or dogbone cross-section) of the polymer which has a sufficiently high ratio of external heat-dissipating surface area to polymer volume (in the heat-producing portion) to enable it to withstand a minimum power output of at least 50 watts/cm$^3$ (1.09watts/cm$^2$ (7 watts/inc$^2$) across the surface of the tape between the electrodes) when in contact with a solid substrate.

The ratio of external surface area to polymer volume is at least about 15.8cm$^2$/cm$^3$,(40 in$^2$/in$^3$ ), preferably at least about 51.2cm$^2$/cm$^3$ (130 in$^2$/in$^3$), and can be about 78.7cm$^2$/cm$^3$, (200 in$^2$/in$^3$) or higher. In its most preferred form, the tape is of about 1 to 6 cm in width and up to 2 mm in thickness with longitudinal electrodes (e.g. metal strips, braid, or silver paint or a combination of these) applied along (or near) the edges of one or both surfaces. In a preferred embodiment, the electrodes or other laminar element may be attached to the conductive polymer tape by the use of a conductive adhesive. The conductive adhesive, which is in the form of a self-supporting strip composed of an organic polymer and, dispersed in said polymer, a particulate conductive filler, is positioned between the tape and the electrodes or other laminar elements, and is laminated under pressure at a temperature sufficient to melt the adhesive. Laminar elements other than electrodes, e.g. meshes, glass or ceramic layers or other dielectrics, may also be attached by means of the adhesive. The adhesive is generally cut to a shape similar to that of the laminar element, and generally covers at least 30% of the area of the laminar element, preferably at least 50% of the area of the laminar element, particularly at least 75% of the area of the laminar element. The tape may be covered with a dielectric layer.

UHMWPE and VHMWPE are preferred polymers for use in these tapes due to their high volume expansion at elevated temperatures, i.e. at least 10% by volume increase, sometimes as much as 30% by volume at temperatures above the melting point. UHMWPE conductive polymers are preferred for pressure applications because above the melting temperature they maintain a solid elastomeric form without flowing. VHMWPE conductive polymers may be preferred when it is necessary to fill voids between the tape and the substrate. If the tape has slits or apertures cut through it, and the tape melts a surface of the substrate, molten substrate may then flow through the holes, slits, or apertures and then resolidify. Thus the tape may become fixed to the substrate without welding. The materials may thus be incompatible.

The tape may be used to seal the edges of a wrap-around sheet, to butt-weld the ends of two pipes, or to seal a coupling sleeve or pipe onto a pipe by making a lap joint. For example, a coupler (e.g. a sleeve or disk of polyethylene) may be lined on both the inside and outside surfaces with a layer of tape. The coupler may then be used to make connection and provide an end cap barrier between pipes of varying diameters and materials. This is particularly important for use in district heating applications in which connection is made between the outer diameter of a steel pipe and the inner diameter of a plastic pipe. The expansion characteristics of the tape allow a tight seal to be made to both pipes, and the polyethylene disk provides a strong physical moisture barrier between the larger polyethylene pipe and the insulation surrounding the smaller steel pipe, and ensures that the pipes remain in alignment. Alternatively, the tape may be wrapped around a substrate. It may be folded lengthwise and inserted into the recesses of a sealing strip to be used for heating and welding or bonding, allowing the sealing strip to be made from a wider range of materials (e.g. non-melt-processable materials) than if the sealing strip itself is electrically heatable.

In other applications the tare may be folded lengthwise over a substrate, an adhesive layer or a foam layer. A foam layer is particularly useful when the tape is used to seal cables of a variety of shapes and sizes to end plates in a pressurized closure. The compressed foam layer exerts a force which pushes the tape against the surface which is to be bonded and compensates for any nonuniformities or irregularities in the cable surface.

The invention is further illustrated by the accompanying drawings, in which:

Figure 1 shows a wrap-around sleeve having a sealing strip for securing it in the wrapped configuration;

Figure 2 shows a sealing strip with electrical heating means;

Figures 3 and 4 show alternative embodiments of a sealing strip;

Figure 5 shows a sealing strip with a central slot;

Figure 6 shows a perspective view of a thin, flexible conductive polymer tape of substantially rectanglular cross-section;

Figure 7 is a cross-sectional view illustrating a pipe lap type joint made with a courling sleeve;

Figure 8 is a cross-sectional view illustrating a butt weld type pipe joint using a conductive polymer tape;

Figure 9 shows a conductive polymer tape inserted into the recesses of a sealing strip;

Figure 10 shows various applications for a conductive polymer tare on a cable splice;

Figure 11 shows a side elevation of a pressure access device of the invention;

Figure 12 shows the installed pressure access device;

Figure 13 shows a top view of another embodiment of a pressure access device;

Figure 14 shows a cross-sectional view of the pressure access device of Figure 10.

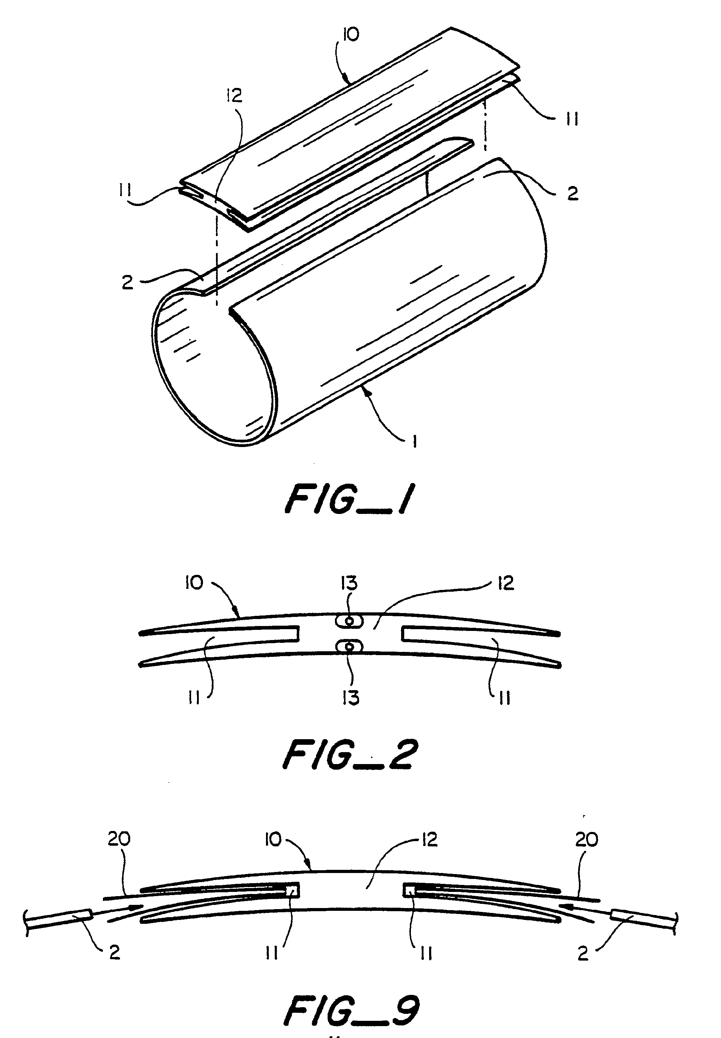

Figure 1 illustrates a wrap-around sleeve 1 having two plain edge portions 2 which may be formed into a tubular structure by use of a sealing strip 10. The sealing strip 10 has edge recesses 11 into which the edge portions 2 may be received by sliding them longitudinally with respect to the strip or inserting them transversely. The sealing strip may be, e.g. from 1 to 10, especially 1 to 5, particularly 2 to 4 cm wide, and 0.5 to 3 cm thick, although its precise size will depend on the size of the sleeve 1. The sealing strip may be heated in any suitable way, e.g. by torch or by hot-air, but electrical heating is preferred. Preferably heating is substantially localized in region 12, and it preferably causes the edges of the edge portion 2 to become welded to it. If preferred, an adhesive may be provided that is activated on heating.

Figure 2 shows a sealing strip which has two electrodes 13 attached to and preferably embedded in region 12. When the electrodes are connected to a power source, the sealing strip will heat.

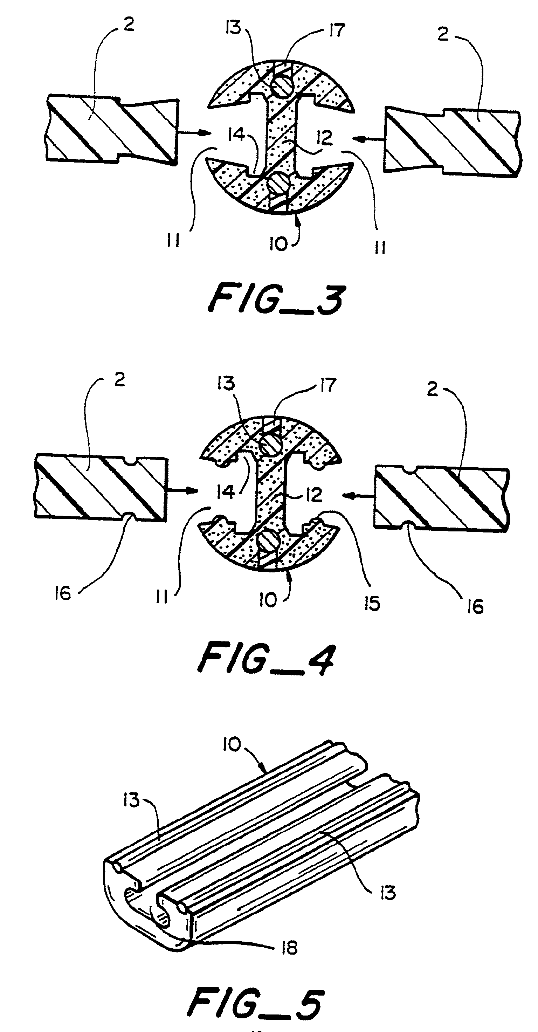

Figures 3 and 4 show alternative embodiments of sealing strip. Each strip comprises edge recesses 11. The recesses 11 of Figure 3 are relatively simple in shape. The recesses 11 of Figure 4 include protrusions 15 which co-operate with corresponding recesses 16 on the edge portions of sheet 2. Each sealing strip comprises a plug 17 which covers the electrodes 13.

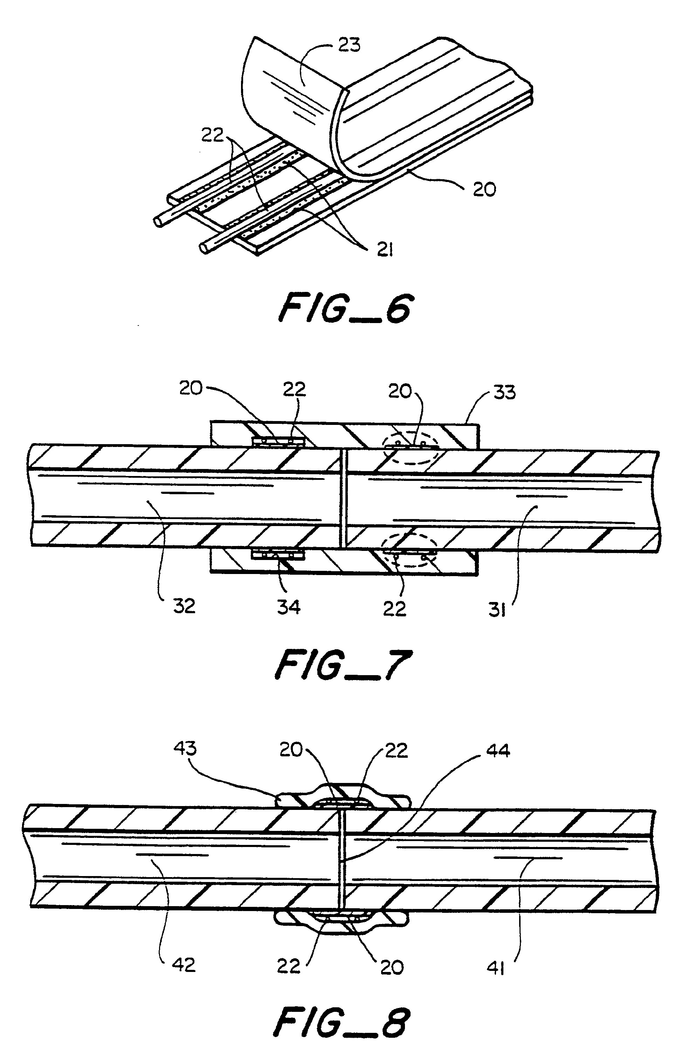

Figure 5 shows an alternative form of sealing strip 10 with a central slot 18, positioned midway between the electrodes 13.

Figure 6 illustrates a conductive polymer tape wherein the tape 20 is printed with conductive ink electrodes 21 for good electrical contact with the conductive polymer, and electrode (or buss) wires 22 are then placed on printed ink electrodes 21. Optional dielectric layer 23 may be laminated on the tape to provide insulation and to assure good contact of the wires 22 with the ink electrodes 21. Optionally, a second dielectric layer may be laminated to the other side of the tape and the two films sealed along the edges to encapsulate the tape.

Figure 7 illustrates a lap pipe joint between pipes 31 and 32 using coupling 33. Coupling 33 has grooves 34 cut in the interior surface thereof to form a recess for containing tape 20. Electrode wires 22 can extend from the conductive polymer tape 20 through the wall of coupling 33 at any desired point. In Figure 7, the left side of the coupling on pipe 32 is shown before powering the tape and the right side on pipe 31 the fused area is shown after powering the tape.

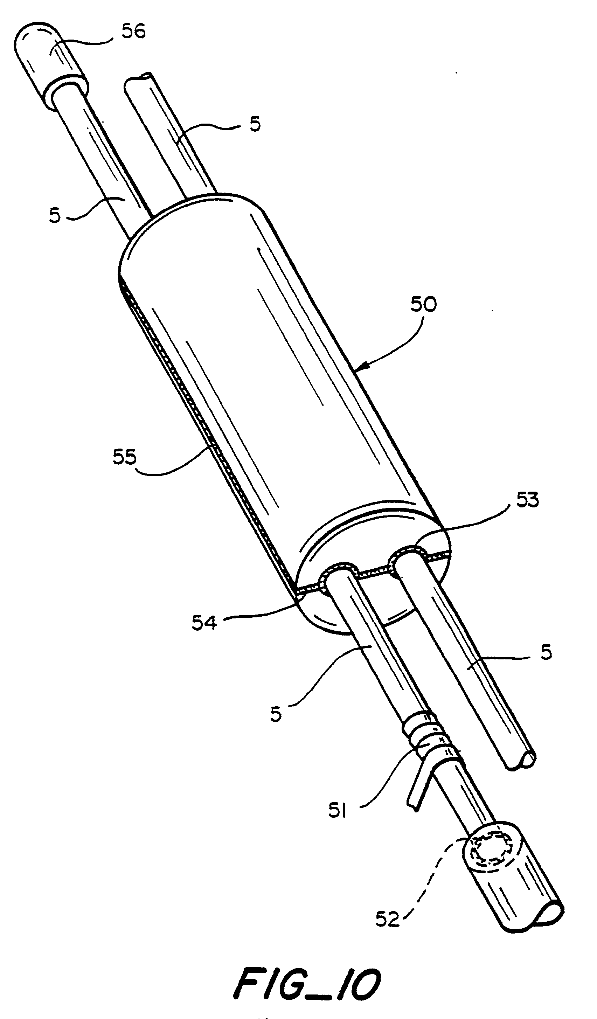

Figure 8 illustrates a butt type joint between pipes 41 and 42 wherein conductive polymer tape 21 is placed over seam 44 and compression means 43 which is a silicone elastomeric band is used to compress the tape against seam 44 to maintain good thermal contact and to hold pressure on the tape when the polymer and conductive polymer tape expands upon heating.

Figure 9 shows sealing strip 10 which has pieces of conductive polymer tape 20 inserted into recesses 11 for use in heating and welding to edge portions 2 of the wrap-around sleeve.

Figure 10 shows various uses for conductive polymer tape 20. A splice case 50 comprises half-shells surrounding cables 5. Cable jacket repair is shown at 51 as a simple wrap of the tape. A seal between a cable or pipe and a duct is shown at 52. A seal between a cable and a splice case end plate is shown at 53, and a seal between end plate halves is shown at 54. A longitudinal seal between the half-shells is shown at 55 and a seal between a cable and an end cap is shown at 56.

Figure 11 shows a pressure access device 60 above a cable 61. The device 60 has a first surface 62 which is to be welded to cable jacket 63. A sheet of adhesive may be provided between the first surface and the cable jacket. The device preferably has a diameter of from 1 to 5 cm, more preferably 1.5 to 3 cm, and a height of from 0.5 to 2.5 cm, preferably 0.75 to 2 cm. The device 60 has means 64 for receiving a tap such as a valve, said means 64 comprising an axial hole which may be provided with an internal screw-thread (preferably tapped directly into the UHMWPE composition, but optionally into a liner within the hole) by means of which the tap may be secured. Means 65 for receiving a first electrode is shown as a circumferential recess positioned close to surface 62. Means for receiving a second electrode is shown as 66 which is part of the same hole 64 for receiving a tap. The second electrode, however, is preferably positioned substantially in the same plane as recesse 65 such that the current path is radial as indicated by the arrows in Figure 11.

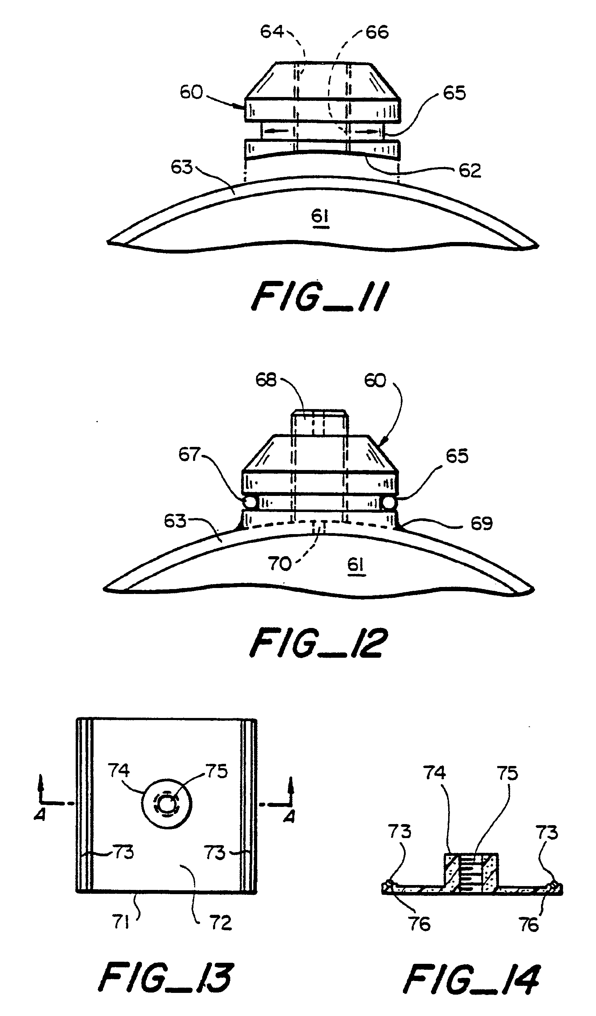

Figure 12 shows a device 60 installed on a cable 61. A first electrode and a tap 68 can be seen. Molten polymeric material 69 at the edges of device 60 indicates that a good weld has occurred. The weld line between the cable and the device is shown as a dotted line. A hole 70 has been drilled through the cable jacket 63.

Figure 13 illustrates an alternative embodiment of a pressure access device. The device 71 comprises a flexible laminar tape 72 of conductive polymer. Elongate electrode strips 73, e.g. metal strips, braided wires, or silver paint, are attached onto the surface of the tape. A cylindrical means for receiving a tap 74 projects from the surface of the tape and has an opening 75 through the tape. The bottom surface of the tape may be smooth or it may be grooved for enhanced adhesion to a substrate.

Figure 14 is a cross-sectional view of the device of Figure 10 along line A-A. Grooves 76 are placed at opposite edges of the tape for placement of the electrodes 73.

This invention can be illustrated by the following examples and the above drawings.

## Example 1

A conductive polymer tape 20 of Figure 3 was prepared by dry blending in high speed blender 95 parts by volume of ultra high molecular weight polyethylene powder, UHMWPE, (Hostalen GUR-413, available from American Hoechst), having a molecular weight of about 4.0 million and an average particle size of about 0.1 mm, and 5 parts by volume of carbon black (Ketjenblack EC300 DJ, available from Akzo Chemie). The mixture was extruded through a ram extruder heated to 170°C at a rate of 5 feet/minute and a pressure of 3000 psi to produce a sintered rod 8 inches (20.3 cm) in diameter. The rod was skived to produce a 0.015 inch by 0.875 inch (0.038 by 2.223 cm) tape.

Using a silver-filled ink (Electrodag 504, available from Acheson Colloids), two electrode strips each 0.1875 inch (0.476 cm) wide were painted on one side of the tape 0.5 inch (1.27 cm) apart. Electrode or buss wires were prepared by flattening 30 AWG silver-coated copper wire to give a cross-section 0.003 by 0.013 inch (0.008 by 0.033 cm), and then braiding 12 flattened wires together. Using a roll laminator operating at 1 ft/min (30.5 cm/min), the electrode/buss wires were laid onto the ink electrode strips and a 0.012 inch (0.030 cm) layer of clear polyethylene film was laminated on the top surface of the tape over the electrode strips and buss wires and a second layer was laminated on the bottom surface of the tare and heat sealed at the edges to produce a fully sealed and insulated conductive polymer tape. This tape can be cut to length and the top layer of polyethylene film peeled back from either end to expose the electrodewires for powering the tape.

Example 2

Two plastic pipes were connected in the following way. A 3.5 inch (8.9 cm) diameter orange polyethylene coupler was injection molded. Two grooves 0.875 inch (2.223 cm) wide and 2 inches (5.08 cm) apart were machined on the inner circumference of the coupler. Two copper foil strips (each 0.002 by 0.188 inch/0.005 by 0.476 cm) with adhesive on one side to hold them in place in the grooves were placed in the grooves and the tape described in Example 1, but without the buss wires or the polyethylene film layers was placed on top of the copper strips so that the ink electrodes on the tape would contact the copper strips. Using a mandrel to hold the tape in place the tape was powered at 30V/5.5A for 1 minute to melt and bond the tape to the coupler.

To connect the coupler to a pipe, the pipe was inserted into the coupler and the tape powered at 30V/5.5A for 2 minutes. The melting of the tape to the pipe and the coupler was observed through a small hole drilled through the wall of the coupler over the tape. At the point of melting the color visible through the hole changed from black to orange. These conditions were sufficient to produce an excellent void-free bond. The expansion of the conductive polymer tape and the melting of the surfaces of the pipe and coupling produces the void-free bond.

Claims

1. A method of joining a first article (2,31,41) to a second article (10,33,43) which comprises
   (1) placing the first article (2,31,41,61) adjacent the second article (10,33,43,60); and
   (2) generating heat within a conductive polymer component (20,60,72) which
      (a) is not heat-recoverable,
      (b) has a ratio of external surface area to volume of at least 15.8cm²/cm³ (40 inch²/inch³),
      (c) is placed between the first and second articles, and
      (d) expands when the heat is generated within it; the heat being generated within the conductive polymer component by passing electrical current through it; said electrical current not passing through either the first or the second article; and
      the first and second articles and the conductive polymer component (20,60,72) being such that, or being subject to physical restraint such that the expansion of the conductive polymer component (20,60,72), when the heat is generated within it, results in the first article (2,31,41) being joined to the second article (10,33,43) through the conductive polymer component.

2. A method according to Claim 1 wherein neither the first article (2,31,41) nor the second article (10,33,343) is heatrecoverable.

3. A method according to Claim 1 or 2 wherein at least one of the first and second articles is a hollow conduit composed of an insulating polymeric composition (31,41).

4. A method according to any one of the preceding claims wherein at least one of the articles (31,44) is composed of an electrically insulating thermoplastic polymeric composition, and the heat generated within the conductive polymer causes the thermoplastic polymer to melt, and thus to join the first and second articles, preferably by fusion of each of the articles to opposite faces of the conductive polymer component.

5. A method according to any one of the preceding claims wherein the first article (61) is a hollow conduit, preferably a telephone cable, and the second article (60) (i) is in the form of a saddle (62) which becomes joined to the hollow conduit (61) around a part only of the circumference of the conduit and (ii) comprises means for receiving a tap (64,74) which provides a port for the passage of fluid into or out of the conduit.

6. A method according to any one of Claims 1 to 4 wherein two first articles (31,32,41,44), each of which is a hollow conduit having an exterior surface portion which is composed of an electrically insulating thermoplastic polymeric composition, are connected in line by joining each of them to a second article (33,43)
   (i) which is in the form of a cylinder, and
   (ii) into which the ends of the hollow conduits are placed,
said second article (33,43), while the heat is being generated within the conductive polymer component, being surrounded by a restraint member.

7. A method according to any one of the preceding claims wherein the conductive polymer (20) comprises (a) a polymeric component which consists essentially of organic polymer particles, preferably particles of ultra high molecular weight polyethylene, which have been sintered together so that the particles have coalesced without completely losing their identity, and (b) a particulate conductive filler which is present substantially only at or near the boundaries of the coalesced particles.

8. A method according to claim 7 wherein each of the articles is composed of polyethylene.

9. A method according to any one of the preceding claims wherein the conductive polymer component (20) has a ratio of external surface area to volume of at least 51.2 cm²/cm³ (130 inch²/inch³), preferably at least 78.7 cm²/cm³ (200 inch²/inch³).

10. An article which is suitable for use as the conductive polymer component in a method as claimed in any one of the preceding claims, which is not heat-recoverable, and which comprises:

(a) an element which is in the form of a tape (10,20) and which is composed of a conductive polymer which

(i) comprises a sintered polymeric component composed of ultra high molecular weight polyethylene and, distributed in the polymeric component, a conductive particulate filler, and
(ii) increases in volume by at least 10% when it is heated from 23°C to the melting point of at least part of the polymeric component, and

(b) electrodes (22) which can be connected to a source of electrical power and which, when so connected, cause current to flow through the conductive polymer element.

11. A method or article according to any preceding claim wherein the conductive polymer component (20) is covered with a dielectric layer (23).

**Patentansprüche**

1. Verfahren zum Verbinden eines ersten Gegenstands (2, 31, 41) mit einem zweiten Gegenstand (10, 33, 43), umfassend folgende Schritte:

(1) Anordnen des ersten Gegenstands (2, 31, 41, 61) angrenzend an den zweiten Gegenstand (10, 33, 43, 60) und
(2) Erzeugen von Wärme innerhalb einer leitfähigen Polymerkomponente (20, 60, 72), die

(a) nicht wärmerückstellbar ist,
(b) ein Verhältnis externe Oberfläche/Volumen von wenigstens 15,8 cm²/cm³ (40 inch²/inch³) hat,
(c) zwischen dem ersten und dem zweiten Gegenstand angeordnet ist, und
(d) sich ausdehnt, wenn die Wärme in ihr erzeugt wird; wobei die Wärme in der leitfähigen Polymerkomponente erzeugt wird, indem elektrischer Strom durch sie geleitet wird;

wobei der elektrische Strom weder durch den ersten noch durch den zweiten Gegenstand fließt; und

der erste und der zweite Gegenstand und die leitfähige Polymerkomponente (20, 60, 72) derart sind oder derart physisch festgelegt sind, daß die Ausdehnung der leitfähigen Polymerkomponente (20, 60, 72) bei Erzeugung der Wärme in ihr dazu führt, daß der erste Gegenstand (2, 31, 41) durch die leitfähige Polymerkomponente mit dem zweiten Gegenstand (10, 33, 43) verbunden wird.

2. Verfahren nach Anspruch 1, wobei weder der erste Gegenstand (2, 31, 41) noch der zweite Gegenstand (10, 33, 43) wärmerückstellbar ist.

3. Verfahren nach Anspruch 1 oder 2, wobei wenigstens entweder der erste oder der zweite Gegenstand eine hohle Leitung aus einem aus einer isolierenden Polymerzusammensetzung (31, 41) bestehenden Isolierpolymer ist.

4. Verfahren nach einem der vorhergehenden Ansprüche, wobei wenigstens einer der Gegenstände (31, 44) aus einer elektrisch isolierenden thermoplastischen Polymerzusammensetzung besteht und die in dem leitfähigen Polymer erzeugte Wärme bewirkt, daß das thermoplastische Polymer schmilzt und dadurch den ersten und den zweiten Gegenstand, bevorzugt durch Verschmelzen von jedem der Gegenstände mit gegenüberliegenden Flächen der leitfähigen Polymerkomponente, verbindet.

5. Verfahren nach einem der vorhergehenden Ansprüche, wobei der erste Gegenstand (61) eine hohle Leitung, bevorzugt ein Telefonkabel, ist und der zweite Gegenstand (60) (i) als Sattel (62) ausgebildet ist, der mit der hohlen Leitung (61) nur um einen Teil des Umfangs der Leitung verbunden wird, und (ii) eine Einrichtung zur Aufnahme eines Abgriffes (64, 74) umfaßt, der eine Öffnung für den Fluiddurchtritt in die oder aus der Leitung bildet.

6. Verfahren nach einem der Ansprüche 1 bis 4, wobei zwei erste Gegenstände (31, 32, 41, 44), von denen jeder eine hohle Leitung mit einem aus einer elektrisch isolierenden thermoplastischen Polymerzusammensetzung bestehenden äußeren Oberflächenbereich ist, in Reihe verbunden werden, indem jeder von ihnen mit einem zweiten Gegenstand (33, 43) verbunden wird,

(i) der als Zylinder ausgebildet ist und
(ii) in dem die Enden der hohlen Leitungen angeordnet werden,

wobei der zweite Gegenstand (33, 43) während der Erzeugung der Wärme in der leitfähigen Polymerkomponente von einem Festlegeelement umgeben ist.

7. Verfahren nach einem der vorhergehenden Ansprüche, wobei das leitfähige Polymer (20) umfaßt:
(a) eine Polymerkomponente, die im wesentlichen aus organischen Polymerteilchen, bevorzugt Teilchen von ultrahochmolekularem Polyethylen, besteht, die so zusammengesintert sind, daß die Teilchen ohne vollständigen Verlust ihrer Identität miteinander verschmolzen sind, und (b) einen teilchenförmigen leitfähigen Füllstoff, der im wesentlichen nur an oder nahe den Grenzflächen der verschmolzenen Teilchen vorhanden ist.

8. Verfahren nach Anspruch 7, wobei jeder der Gegenstände aus Polyethylen besteht.

9. Verfahren nach einem der vorhergehenden Ansprüche, wobei die leitfähige Polymerkomponente (20) ein Verhältnis externe Oberfläche/volumen von wenigstens 51,2 cm²/cm³ (130 inch²/inch³), bevorzugt von wenigstens 78,7 cm²/cm³ (200 inch²/inch³), hat.

10. Gegenstand, der zur Verwendung als leitfähige Polymerkomponente in einem Verfahren nach einem der vorhergehenden Ansprüche geeignet und nicht wärmerückstellbar ist und folgendes aufweist:

(a) ein Element, das als Band (10, 20) ausgebildet ist und aus einem leitfähigen Polymer besteht, das

(i) eine aus ultrahochmolekularem Polyethylen bestehende gesinterte Polymerkomponente und in der Polymerkomponente verteilt einen leitfähigen teilchenförmigen Füllstoff aufweist und

(ii) sein volumen um wenigstens 10 % vergrößert, wenn es von 23 °C auf den Schmelzpunkt wenigstens eines Teils der Polymerkomponente erwärmt wird, und

(b) Elektroden (22), die an eine elektrische Energiequelle anschließbar sind und nach ihrem Anschließen einen Strom durch das leitfähige Polymerelement fließen lassen.

11. Verfahren oder Gegenstand nach einem der vorhergehenden Ansprüche, wobei die leitfähige Polymerkomponente (20) von einer dielektrischen Schicht (23) bedeckt ist.

## Revendications

1. Procédé d'assemblage d'un premier article (2, 31, 41) sur un second article (10, 33, 43), qui consiste

(1) à placer le premier article (2, 31, 41, 61) afin qu'il soit adjacent au second article (10, 33; 43, 60) ; et

(2) à générer de la chaleur dans une pièce en polymère conducteur (20, 60, 72) qui

(a) n'est pas douée de reprise de forme par la chaleur,

(b) présente un rapport aire de surface extérieure/volume d'au moins 15,8 cm²/cm³ (40 inch²/inch³),

(c) est placée entre les premier et second articles, et

(d) se dilate lorsque de la chaleur est générée à l'intérieur de cette pièce, la chaleur étant générée à l'intérieur de la pièce en polymère conducteur par passage d'un courant électrique à travers elle, ledit courant électrique ne passant pas à travers le premier article ou le second article ; et

les premier et second articles et la pièce (20, 60, 72) en polymère conducteur étant tels que, ou étant soumis à une entrave physique telle que, la dilatation de la pièce (20, 60, 72) en polymère conducteur, lorsque la chaleur est générée à l'intérieur de cette pièce, aboutit à ce que le premier article (2, 31, 41) soit assemblé sur le second article (10, 33, 43) par l'intermédiaire de la pièce en polymère conducteur.

2. Procédé selon la revendication 1, dans lequel ni le premier article (2, 31, 41) ni le second article (10, 33, 43) ne sont doués de reprise de forme par la chaleur.

3. Procédé selon la revendication 1 ou 2, dans lequel au moins l'un des premier et second articles est un conduit creux formé d'une composition polymérique isolante (31, 41).

4. Procédé selon l'une quelconque des revendications précédentes, dans lequel au moins l'un des articles (31, 44) est composé d'une composition polymérique thermoplastique électriquement isolante, et la chaleur générée à l'intérieur du polymère conducteur amène le polymère thermoplastique à fondre et donc à assembler les premier et second articles, de préférence par fusion de chacun des articles à des faces opposées de la pièce en polymère conducteur.

5. Procédé selon l'une quelconque des revendications précédentes, dans lequel le premier article (61) est un conduit creux, de préférence un câble de téléphone, et le second article (60) (i) se présente sous la forme d'une selle (62) que l'on assemble sur le conduit creux (61) sur une partie seulement de la circonférence du conduit, et (ii) comporte des moyens destinés à recevoir une prise (64, 74) qui présente un orifice pour le passage d'un fluide vers l'intérieur ou l'extérieur du conduit.

6. Procédé selon l'une quelconque des revendications 1 à 4, dans lequel deux premiers articles (31, 32, 41, 44), constitués chacun d'un conduit creux ayant une partie de surface extérieure qui est composée d'une composition polymérique thermoplastique électriquement isolante, sont raccordés en ligne par assemblage de chacun d'eux sur un second article (33, 43)

(i) qui se présente sous la forme d'un cylindre, et

(ii) dans lequel les extrémités des conduits creux sont placées,

ledit second article (33, 43), pendant que de la chaleur est générée à l'intérieur de la pièce en polymère conducteur, étant entouré d'un élément d'entrave.

7. Procédé selon l'une quelconque des revendications précédentes, dans lequel le polymère conducteur (20) comprend (a) un composant polymérique qui est constitué essentiellement de particules de polymère organique, avantageusement des particules de polyéthylène de poids moléculaire ultra-haut, qui ont été frittées ensemble afin que les particules se lient par coalescence sans perdre complètement leur identité, et (b) une charge conductrice en particules qui n'est présente sensiblement qu'aux limites des particules liées par coalescence ou qu'à proximité de ces limites.

8. Procédé selon la revendication 7, dans lequel chacun des articles est composé de polyéthylène.

9. Procédé selon l'une quelconque des revendications précédentes, dans lequel la pièce (20) en polymère conducteur présente un rapport de l'aire de surface extérieure au volume d'au moins 51,2 cm²/cm³ (130 in²/in³), avantageusement d'au moins 78,7 cm²/cm³ (200 in²/in³).

10. Article qui convient à une utilisation en tant que pièce en polymère conducteur dans un procédé selon l'une quelconque des revendications précédentes, qui n'est pas doué de reprise de forme par la chaleur et qui comporte :

(a) un élément qui se présente sous la forme d'une bande (10, 20) et qui est composé d'un polymère conducteur qui

(i) comprend un constituant polymérique fritté composé d'un polyéthylène de poids moléculaire ultra-haut et, distribuée dans le constituant polymérique, une charge conductrice en particules, et

(ii) augmente de volume d'au moins 10 % lorsqu'il est chauffé de 23°C jusqu'au point de fusion d'au moins une partie du constituant polymérique, et

(b) des électrodes (22) qui peuvent être connectées à une source d'énergie électrique et qui, lorsqu'elles sont ainsi connectées, font circuler un courant à travers à l'élément en polymère conducteur.

11. Procédé ou article selon l'une quelconque des revendications précédentes, dans lequel la pièce (20) en polymère conducteur est recouverte d'une couche diélectrique (23).

FIG_1

FIG_2

FIG_9

11

*FIG_3*

*FIG_4*

*FIG_5*

*FIG_6*

*FIG_7*

*FIG_8*

**FIG_10**

*FIG_II*

*FIG_I2*

*FIG_I3*

*FIG_I4*